# EUROPEAN PATENT SPECIFICATION

(11) **EP 4 283 569 B1**
(45) Date of publication and mention of the grant of the patent: **01.10.2025**
(21) Application number: 22193233.8
(22) Date of filing: 31.08.2022
(51) Int. Cl.: G06V 10/62, G06Q 10/0631, G06V 10/80, G06V 20/13, G06V 20/10, G01K 7/25, G06Q 10/04, G06Q 50/22, G01W 1/02, G06Q 50/26

(54) **DISASTER RESPONSE SYSTEM USING SATTELITE IMAGE**
KATASTROPHENANSPRECHSYSTEM UNTER VERWENDUNG VON SATELLITENBILD
SYSTÈME DE RÉPONSE À UN SINISTRE UTILISANT UNE IMAGE SATELITE

(30) Priority: 26.05.2022 KR 20220064593
(43) Date of publication of application: 29.11.2023
(73) Proprietor: CONTEC Co., Ltd., Yuseong-gu, Daejeon 34133 (KR)
(72) Inventor: LEE, Sunghee, 30104 Sejong-si (KR)
(74) Representative: Frenkel, Matthias Alexander

(56) References cited:
- CN-A- 105 719 053
- CN-A- 114 333 207
- CN-A- 114 444 791
- US-A1- 2019 354 873

## Description

### BACKGROUND

### 1. Field

At least one example embodiment relates to a disaster response method and system for performing the same, and more particularly, to a disaster response system using a satellite image.

### 2. Description of Related Art

Disasters may include natural disasters, such as extreme weather events and disasters, such as occurrence of accidents, for example, wildfires and the like. Such disasters are surprise and local and may become a bigger issue unless a response corresponding thereto is promptly performed.

To solve such issues, a disaster response system using a satellite image may be considered. However, although a damaged area may be simply specified by using a satellite image, it is not easy to accurately verify a spread degree of damage.

In detail, the disaster response system may have a degraded accuracy when determining an exact scale of damage and may perform prediction corresponding to a level of guess based on past occurrence experience. For example, if it is difficult to predict occurrence of tsunami in the vicinity of the coast, significant damage to property and human life will occur. Therefore, it is important to accurately calculate a scale of damage in a situation in which an input size of manpower for recovery needs to be predicted.

Patent documents include Chinese Patent No. 212675675 (2021.03.09) and Korean Patent Registration No. 10-1944616 (2019.01.25).

US 2019/354873 A1 discloses watershed hydrology analysis and management process and system with a network of weather stations and artificial drainage systems with artificial and natural reservoir management through locks and pumping stations. In the document the system is described to evaluate potential hydrologic risk in each area and analyses the possible consequences of future precipitations using simulations, calculate hydrographs for each sub-basin, streams and rivers in the basin, simulate the behavior of the basin under different scenarios corresponding to different types of management of the operation of locks and/or pumps and compares its results in terms of loss of flooded area, economic loss in each area, loss for flooding of urban areas, etc., and optimize the simulation through artificial intelligence (AI, meta-heuristic algorithms, neural networks, etc.) to allow it to act as a search engine to find better solutions and the best configuration of resource management that allows minimizing the socio-economic impact on each basin.

CN 114 333 207 A discloses a fire whole-process monitoring method and device based on remote sensing data. In the document the method is described to comprise obtaining first remote sensing data at a monitoring region in real time, and analyzing the first remote sensing data, when it is analyzed that the first remote sensing data contains the temperature abnormal area, the temperature abnormal area is extracted from the first remote sensing data, and the current fire spreading trend is predicted based on the temperature abnormal area to obtain the corresponding fire spreading trend, and when it is analyzed that no temperature abnormal area exists in the first remote sensing data, performing fire early warning processing on the current monitoring area based on the first remote sensing data to obtain a corresponding fire early warning result.

### summary

The invention is defined by the appended claims.

### BRIEF DESCRIPTION OF THE DRAWINGS

These and/or other aspects, features, and advantages of the invention will become apparent and more readily appreciated from the following description of example embodiments, taken in conjunction with the accompanying drawings of which:
FIG. 1 is a diagram illustrating a configuration of a disaster response system using a satellite image according to an example embodiment;
FIG. 2 is a diagram illustrating a detailed configuration of a central processing device of a disaster response system according to an example embodiment;
FIG. 3 is a diagram illustrating a detailed configuration of a monitoring unit, a determination unit, and a damage calculator of a disaster response system according to an example embodiment;
FIG. 4 is a diagram illustrating a detailed configuration of a deep learning module or an artificial intelligence (AI) server that interacts with a disaster response system according to an example embodiment; and
FIG. 5 is a diagram illustrating a detailed configuration for information exchange between an AI server interacting a disaster response system and a damage calculator and an external server according to an example embodiment.

### DETAILED DESCRIPTION

Specific structural or functional descriptions related to example embodiments according to the concept of the present invention set forth herein are simply provided to explain the example embodiments according to the concept of the present invention and the example embodiments according to the concept of the present invention may be implemented in various forms and are not limited to the example embodiments described herein.

Although terms of "first," "second," and the like may be used to explain various components, the components are not limited to such terms. These terms are used only to distinguish one component from another component. For example, a first component may be referred to as a second component, or similarly, the second component may be referred to as the first component within the scope of the present invention.

When it is mentioned that one component is "connected" or "accessed" to another component, it may be understood that the one component is directly connected or accessed to another component or that still other component is interposed between the two components. In addition, it should be noted that if it is described in the specification that one component is "directly connected" or "directly joined" to another component, still other component may not be present therebetween. Likewise, expressions, for example, "between" and "immediately between" and "adjacent to" and "immediately adjacent to" may also be construed as described in the foregoing.

The terminology used herein is for the purpose of describing particular example embodiments only and is not to be limiting of the example embodiments. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, components or a combination thereof, but do not preclude the presence or addition of one or more other features, integers, steps, operations, elements, components, and/or groups thereof.

Unless otherwise defined herein, all terms used herein including technical or scientific terms have the same meanings as those generally understood by one of ordinary skill in the art. Terms defined in dictionaries generally used should be construed to have meanings matching contextual meanings in the related art and are not to be construed as an ideal or excessively formal meaning unless otherwise defined herein.

Hereinafter, example embodiments will be described in detail with reference to the accompanying drawings. However, the scope of the claims is not limited to or restricted by such example embodiments. Like reference numerals refer to like components throughout.

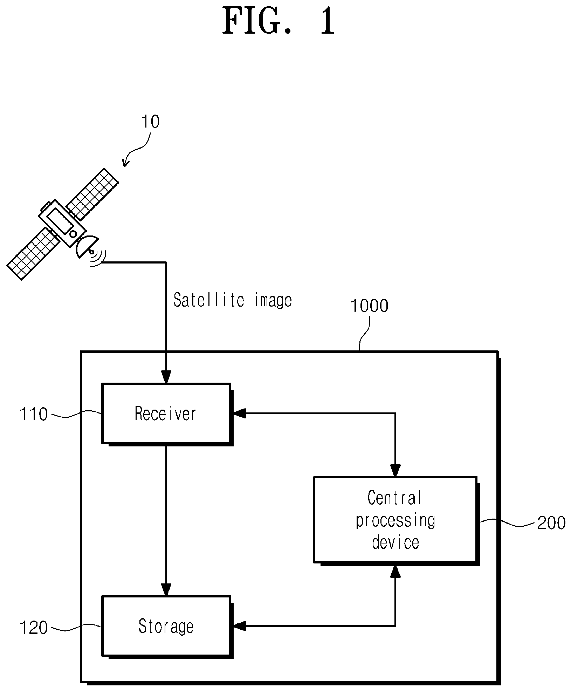

A disaster response system using a satellite image according to an example embodiment is described with reference to the accompanying drawings. FIG. 1 is a diagram illustrating a configuration of a disaster response system using a satellite image according to an example embodiment. Referring to FIG. 1, a disaster response system 1000 may be configured as a plurality of modules/units that is implemented as a single apparatus or may be configured as a plurality of apparatuses in which a portion of modules/units is implemented as a separate apparatus. Here, the disaster response system 1000 may be implemented as an apparatus configured to receive a satellite image to cope with a disaster and to determine a degree of damage in a damaged area according to a change in the satellite image.

Referring to FIG. 1, the disaster response system 1000 may include a receiver 110, a storage 120, and a central processing device 200. The receiver 110 may be configured to receive a captured image from a satellite 10. The storage 120 may operatively couple to the receiver 110. The storage 120 may be configured to store the satellite image received from the receiver 110. The central processing device 200 may operatively couple to the receiver 110 and the storage 120. The central processing device 200 may be configured to predict a damage occurrence probability according to occurrence of a disaster through a time series change in the satellite image. The central processing device 200 may be configured to determine a damage occurrence status and to calculate a scale of damage in response to occurrence of the damage.

Therefore, the present invention may entitle a configuration and a specific operation of the disaster response system 1000 that predicts and detects a change in an object through a satellite image and infers a scale of damage. In this regard, it is possible to provide the disaster response system 1000 that all performs monitoring, detection, and scale calculation of damage occurring on the ground regardless of a type of disaster.

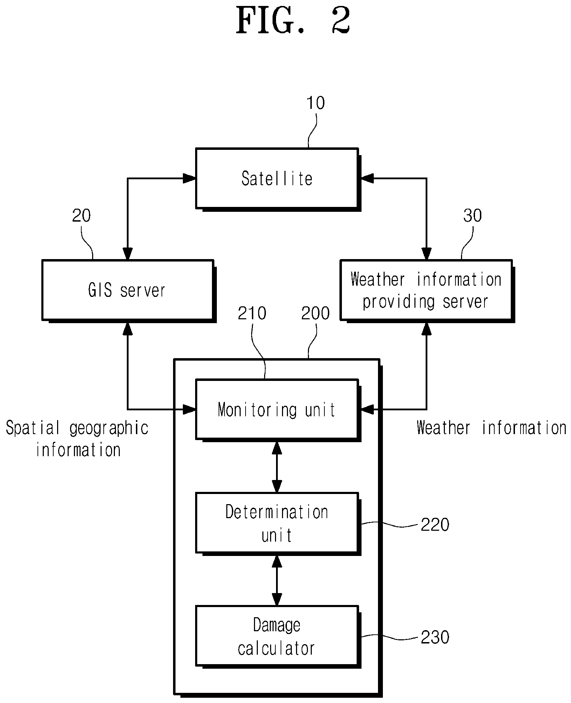

Each of the components of the disaster response system 1000 using the satellite image according to an example embodiment may predict/monitor a damage occurrence probability, may determine a damage occurrence, and may calculate a scale of damage through detailed components. Here, FIG. 2 is a diagram illustrating a detailed configuration of a central processing device of a disaster response system according to an example embodiment.

Referring to FIG. 2, the central processing device 200 may include a monitoring unit 210, a determination unit 220, and a damage calculator 230. The central processing device 200 may be configured to interact with a plurality of servers. The central processing device 200 may be configured to receive spatial geographic information through the receiver 110 of FIG. 1 through interaction with a geographic information system (GIS) server 20. The central processing device 200 may be configured to receive weather information through the receiver 110 of FIG. 1 through interaction with a weather information providing server 30.

Referring to FIGS. 1 and 2, the monitoring unit 210 may operatively couple to the receiver 110. The monitoring unit 210 may connect to the GIS server 20 configured to provide spatial geographic information and the weather information providing server 30 configured to provide weather information. The monitoring unit 210 may be configured to predict a type of disaster and a damage occurrence probability in a satellite image shooting area. The determination unit 220 may operatively couple to the receiver 110 and the monitoring unit 210. The determination unit 220 may be configured to detect a time series change rate of the received satellite image. The determination unit 220 may be configured to determine occurrence of damage according to the disaster based on the received time series change rate of the received satellite image.

The damage calculator 230 may operatively couple to the monitoring unit 210 and the determination unit 220. The damage calculator 230 may be configured to calculate the scale of damage according to the occurrence of the disaster. Referring to FIG. 2, the present invention may entitle a detailed configuration of the central processing device 200 that predicts a damage occurrence probability through a satellite image, spatial geographic information, and weather information, determines occurrence of damage, and infers a scale of damage according thereto.

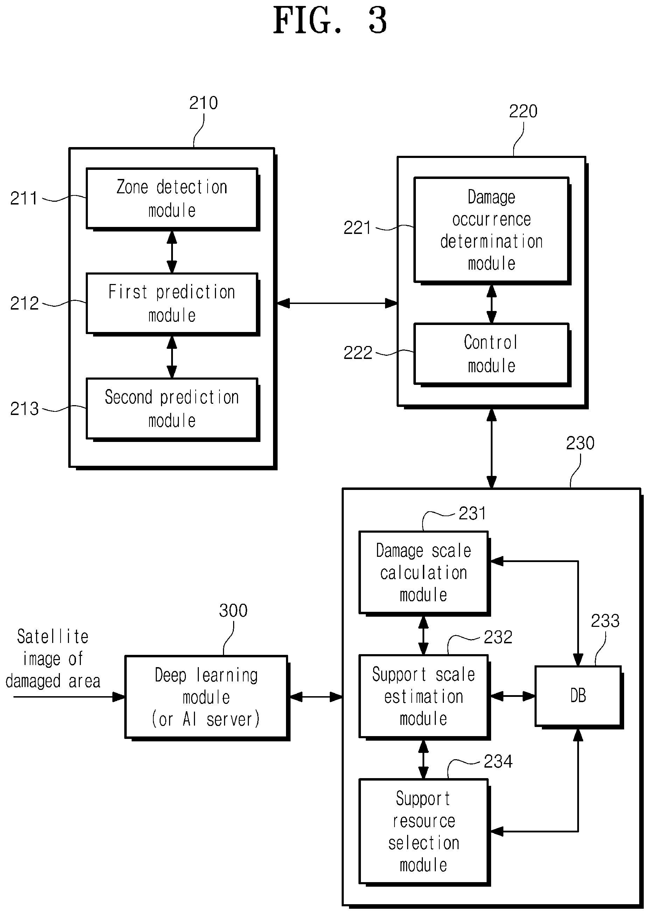

Meanwhile, each of the monitoring unit 210, the determination unit 220, and the damage calculator 230 of the central processing device 200 of the disaster response system 1000 using the satellite image according to an example embodiment may effectively calculate a damaged area, a type of damage, a damage occurrence status, a degree of damage, and a damage recovery method through more detailed configuration/modules. Here, FIG. 3 illustrates a detailed configuration of a monitoring unit, a determination unit, and a damage calculator of a disaster response system according to an example embodiment.

Referring to FIG. 3, the monitoring unit 210 may be configured to include a zone detection module 211, a first prediction module 212, and a second prediction module 213. The zone detection module 211 may be configured to specify a satellite image shooting area that is an area in which a satellite image is captured, based on weather information. The first prediction module 212 may operatively couple to the zone detection module 211. The first prediction module 212 may be configured to predict a type of damage predicted for each zone of the specified satellite image shooting area. The second prediction module 213 may operatively couple to the zone detection module 211 and the first prediction module 212. The second prediction module 213 may be configured to predict a damage occurrence probability and a scale of damage based on the weather information and the type of damage predicted for each zone. Therefore, the present invention may entitle the detailed configuration of the monitoring unit 210 that predicts a damage occurrence status and predicts a type of damage and a scale of damage predicted for each specified zone.

Referring to FIG. 3, the determination unit 220 may operatively couple to the monitoring unit 210. The determination unit 220 may be configured to include a damage occurrence determination module 221 and a control module 222.

The damage occurrence determination module 221 may be configured to determine the damage occurrence status and a type of damage that has occurred through the satellite image. The control module 222 may operatively couple to the damage occurrence determination module 221. The control module 222 may be configured to specify a damaged area and to request a high-resolution satellite image for the damaged area. Therefore, the control module 222 may more specifically define the damaged area and may more accurately verify a type of damage and a scale of damage through the received high-resolution satellite image. Therefore, the present invention may determine whether the damage has actually occurred due to a disaster and a type of the damage through the satellite image. Also, the present invention may entitle a detailed configuration of the determination unit that requests the high-resolution satellite image to infer more-detailed information.

Referring to FIG. 3, the damage calculator 230 may operatively couple to the monitoring unit 210 and the determination unit 220. The damage calculator 230 may be configured to include a damage scale calculation module 231 and a support scale estimation module 232. The damage calculator 230 may be configured to further include a database (DB) 233 and a support resource selection module 234. The damage scale calculation module 231 may distinguishably predict human damage using a damaged area and nearby terminal location information and physical damage using spatial geographic information. The support scale estimation module 232 may operatively couple to the damage scale calculation module 231. The support scale estimation module 232 may be configured to estimate the scale of support for recovery of damage according to the scale of damage. Therefore, the present invention may calculate a scale of material damage using a change in an object and GIS information through the satellite image. Also, the present invention may entitle the contents that human damage is predicted based on location information of a terminal connected to a nearby base station.

The database 233 may operatively couple to the damage scale calculation module 231 and the support scale estimation module 232. The database 233 may be configured to periodically receive, update, and manage information on a location and a scale of support manpower and equipment. The support resource selection module 234 may operatively couple to the support scale estimation module 232 and the database 233. The support resource selection module 234 may be configured to select the support manpower and equipment using a real-time satellite image according to the scale of support estimated by the support scale estimation module 232. Here, the real-time satellite image may be a high-resolution real-time satellite image that is requested for the damaged area specified by the control module 222. Therefore, the present invention may entitle the contents that the damage calculator 230 determines an input of manpower and equipment to implement prompt recovery.

Referring to FIG. 3, the damage calculator 230 of the disaster response system 1000 according to an example embodiment may predict a degree of damage in consideration of a change (a change rate, a degree of damage, and a spread degree of damage) in the satellite image based on AI through a deep learning module or an AI server 300. Therefore, the damage calculator 230 may calculate manpower and cost information for recovery of damage in the damaged area and may calculate the information on the manpower and the equipment required for recovery of the damaged area in consideration of an amount of time used until the manpower and the equipment arrive. The detailed configuration of predicting a degree of damage in consideration of a change (a change rate, a degree of damage, and a spread degree of damage) in the satellite image based on AI is further described with reference to the accompanying drawings.

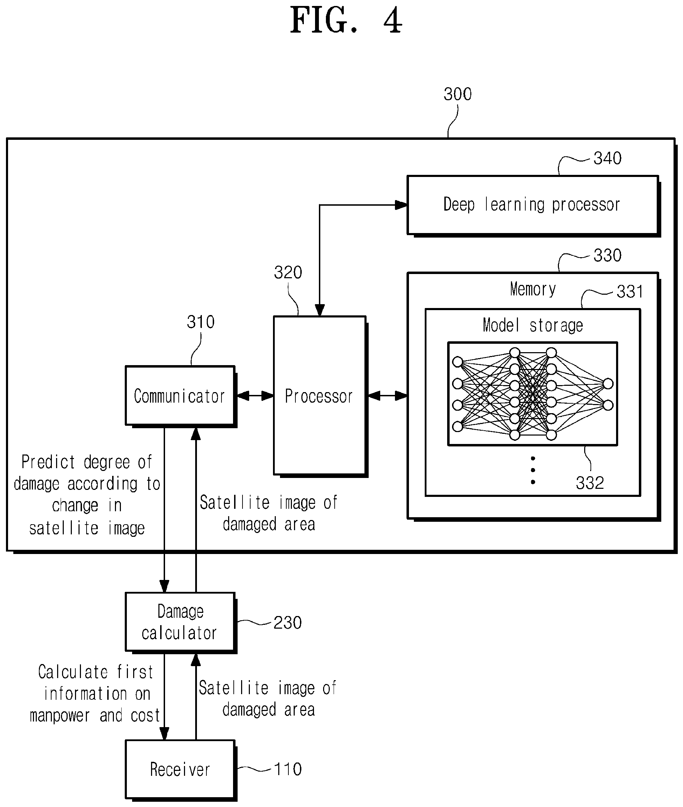

FIG. 4 is a diagram illustrating a detailed configuration of a deep learning module or an AI server that interacts with a disaster response system according to an example embodiment. Referring to FIG. 4, the AI server 300 may refer to a device that trains an artificial neural network with a machine learning algorithm or uses the trained artificial neural network. Here, the AI server 300 may include a plurality of servers and may perform distributed processing and may be configured as a 5G network, but is not limited thereto. Here, the AI server 300 may be included as a partial configuration of the central processing device 200 of the disaster response system 1000 and may perform at least a portion of AI processing.

The AI server 300 may include a communicator 310, a processor 320, a memory 330, and a running processor 340. The communicator 310 may transmit and receive data to and from the disaster response system 1000 or an external device, such as another AI apparatus.

The processor 320 may infer a result value for new input data using a learning model and may generate a response or a control instruction based on the inferred result value. The learning model may be a model that is being trained or trained stored in a model storage 331, which is described in the following.

The memory 330 may include the model storage 331. The model storage 331 may store the model (or, an artificial neural network 332) being trained or trained through the running processor 240. An example of the running processor 340 may be a deep learning processor, but is not limited thereto. Machine learning refers to detailed approach method that implements AI and deep learning refers to technology that uses an artificial neural network in a machine learning method.

The running processor 340 may train the artificial neural network 332 using training data. The learning model may be used while being mounted to the AI server 300, or may be used while being mounted to an external device.

The learning model may be implemented using hardware, software, or combination of hardware and software. When a portion of or all of the learning model is implemented as software, at least one instruction that constitutes the learning model may be stored in the memory 330.

The processor 320 may receive satellite images of a damaged area, may detect a change in the satellite images of the damaged area, and may predict a degree of damage according to the change in the satellite images through the damage calculator 230. The damage calculator 230 may calculate first information on the manpower and cost required for recovery of damage in the damaged area based on the predicted degree of damage through interaction with the processor 320. The damage calculator 230 may deliver the first information on the manpower and cost required for recovery of damage to the receiver 110 and an output unit (not shown) such as a display may output the first information.

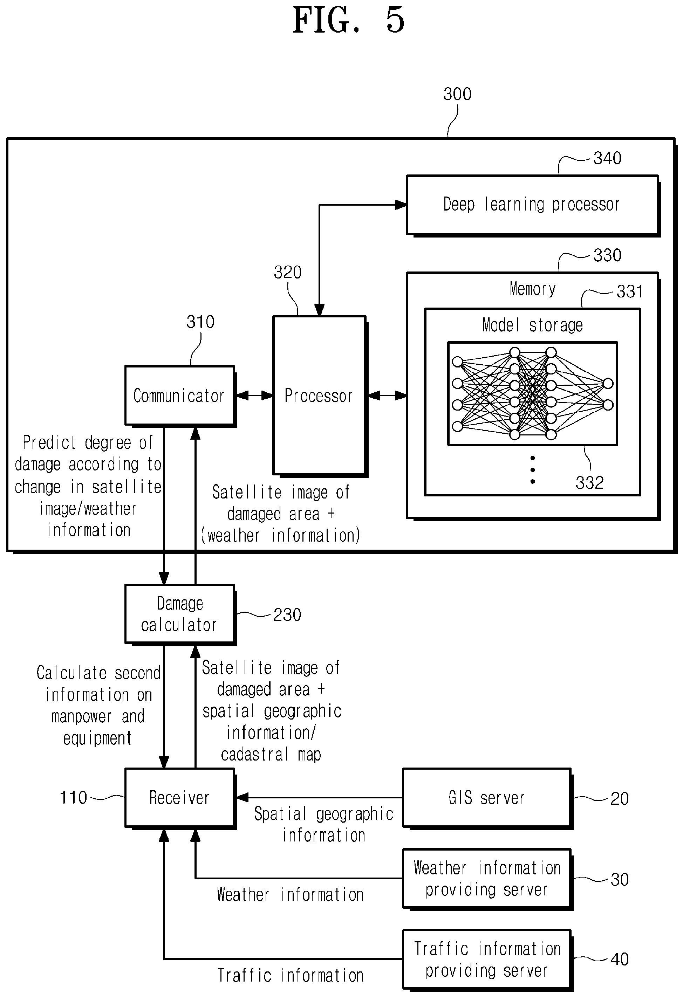

As described above, the disaster response system 1000 according to an example embodiment may calculate manpower and cost information for recovery of damage in the damaged area and may calculate information on the manpower and the equipment required for recovery of the damaged area in consideration of an amount of time used until the manpower and the equipment arrive. The detailed configuration of predicting a degree of damage in consideration of a change (a change rate, a degree of damage, and a spread degree of damage) in the satellite image based on AI is further described with reference to the accompanying drawings. Here, FIG. 5 is a diagram illustrating a detailed configuration for information exchange between an AI server interacting a disaster response system and a damage calculator and an external server according to an example embodiment.

Description related to a detailed operation of the detailed configuration of the AI server 300 of FIG. 5 refers to the description related to the detailed operation made with reference to FIG. 4. The processor 320 of FIG. 4 inputs satellite images over time in the damaged area and predicts a degree of damage according to a change in the satellite images. Meanwhile, the processor 320 of FIG. 5 inputs satellite images and additional auxiliary information over time in the damaged area and predicts a degree of damage according to the change in the satellite images and the additional auxiliary information.

The learning model 332 of FIG. 4 for predicting a degree of damage according to the change in the satellite image may be one single model. Meanwhile, the learning model 332 of FIG. 5 for predicting the degree of damage according to the change in the satellite image and the additional auxiliary information may include at least two learning models. For example, the learning model 332 in which a first learning model configured to predict a degree of damage according to the change in the satellite image and a second learning model configured to predict a degree of damage according to the change in the additional auxiliary information are combined may be used.

Referring to FIG. 5, the damage calculator 230 may calculate second information on manpower and cost required for recovery of damage using the real-time satellite image, spatial geographic information, auxiliary information on a cadastral map, and first information on manpower and cost. The damage calculator 230 may calculate second information on support manpower and equipment required for recovery of damage using a real-time satellite image, spatial geographic information, a cadastral map, auxiliary information on weather information, and first information. To this end, the damage calculator 230 may interact with the GIS server 20 that provides spatial geographic information and auxiliary information on the cadastral map. Also, the damage calculator 230 may interact with the weather information providing server 30 that provides auxiliary information on the weather information. Also, the damage calculator 230 may interact with the traffic information providing server 40 that provides real-time traffic information.

Accordingly, the damage calculator 230 may detect a change in the satellite image and a change in weather information in the damaged area through the deep learning module or the AI server 300 and may predict a degree of damage according to the change in the satellite image and the change in the weather information. The damage calculator 230 may calculate first information on the manpower and the cost required for recovery of damage in the damaged area based on the predicted degree of damage and may calculate second information on the support manpower and equipment required for recovery of the damage. Here, in the case of a disaster such as a forest fire, it is possible to accurately predict a degree of damage, a scale of damage and a scale of recovery of damage in the future by further applying weather information, such as a wind direction, a wind speed, a temperature, and a humidity. As another example, in the case of extreme weather, such as earthquake, typhoon, or tsunami, it is possible to accurately predict a degree of damage, a scale of damage, and a scale of recovery of damage in the future by further applying additional weather information related to earthquake, typhoon, or tsunamic from a current point in time to a certain period of time.

Meanwhile, the damage calculator 230 may detect a change in traffic information from a first place to which the support manpower and equipment are to be dispatched to a second place in the damaged area through the deep learning module or the AI server 300. The damage calculator 230 may predict a spread degree of damage according to an arrival time of the support manpower and equipment based on the change in the satellite image, a change in the weather information, and the change in the traffic information. The damage calculator 230 may calculate an additional input of the support manpower and equipment based on the predicted spread degree of damage. Therefore, if the predicted spread degree of damage is predicted to spread to a third place adjacent to the second place, the damage calculator 230 may control a portion of the additional input of the support manpower and equipment to be dispatched to the third place.

Therefore, the damage calculator 230 of the disaster response system 1000 according to the present invention may more accurately predict a scale of damage and a spread degree of damage in the future using AI and may add and distribute the manpower and equipment required for recovery in consideration of the spread degree of damage/damaged area. Also, the damage calculator 230 may predict an arrival time of manpower and equipment required for recovery according to real-time traffic information and, if the degree of damage exceeds a threshold according to a delay of the arrival time, may perform a traffic control of a corresponding path. Therefore, the damage calculator 230 may decrease the arrival time of manpower and equipment required for recovery in the damaged area and may minimize the spread of damage.

A disaster response system using a satellite image according to example embodiments is described above. The technical effect of the disaster response system using the satellite image according to the example embodiments may be as follows.

According to example embodiments, it is possible to provide a system capable of coping with monitoring, warning, and damage scale estimation related to disasters through a single process using a satellite image.

According to example embodiments, it is possible to predict a damage occurrence probability, to determine a damage occurrence status, and to predict a scale of damage according thereto based on a satellite image, spatial geographic information, and weather information.

According to example embodiments, it is possible to predict a simple damage occurrence status and to accurately predict a type of damage and a scale of damage predicted for each specified zone.

According to example embodiments, it is possible to more accurately predict not only a current degree of damage but also a scale of damage and a spread degree of damage in the future through deep learning AI and to add and distribute manpower and equipment required for recovery in consideration of the spread degree of damage/damaged area.

The additional scope of applicability of the present invention is apparent from the detailed description. The features and effect of the present invention are apparent through the detailed description by referring to the accompanying drawings. Therefore, the technical scope of the present invention may be easily implemented by one of ordinary skill in the art to which the present invention pertains.

Since various changes may be made and example embodiments may be provided to the present invention, specific example embodiments are illustrated in the drawings and described in detail in the detailed description.

According to software implementation, not only the procedures and functions described herein but also design and parameter optimizations related to each of components may be implemented as a separate software module. A software code may be implemented as a software application written in an appropriate program language. The software code may be stored in a memory and may be executed by a controller or a processor.

## Claims

1. A disaster response system using a satellite image, the disaster response system comprising:
a receiver configured to receive a captured image from a satellite;
a storage configured to operatively couple to the receiver and to store the received satellite image; and
a central processing device configured to operatively couple to the receiver and the storage and to predict a damage occurrence probability through a time series change in the satellite image, to determine a damage occurrence status, and to calculate a scale of damage in response to occurrence of the damage,
wherein the central processing device comprises:
a monitoring unit configured to predict a type of disaster and the damage occurrence probability in a satellite image shooting area through connection to a geographic information system, GIS, server configured to provide spatial geographic information and a weather information providing server configured to provide weather information;
a determination unit configured to detect a time series change rate of the received satellite image and to determine occurrence of damage according to the type of disaster; and
a damage calculator configured to calculate the scale of damage according to the occurrence of the type of disaster,
wherein the damage calculator comprises:
a damage scale calculation module configured to distinguishably predict human damage using a damaged area and location information of terminals connected to a base station near by the damaged area and physical damage using the spatial geographic information;
a support scale estimation module configured to estimate a scale of support for recovery of damage according to the scale of damage;
a database configured to periodically receive, update, and manage information on a location and a scale of support manpower and equipment; and
a support resource selection module configured to select support manpower and equipment using a real-time satellite image according to the scale of support estimated by the support scale estimation module, and wherein the damage calculator is configured to,
detect a change in the satellite image of the damaged area through a deep learning module or an artificial intelligence, AI, server and to predict a degree of damage caused by the change in the satellite image, and
calculate first information on manpower and cost required for recovery of damage in the damaged area based on the predicted degree of damage, and
calculate second information on the support manpower and equipment required for recovery of the damage using the real-time satellite image, the spatial geographic information, a cadastral map, auxiliary information on the weather information, and the first information on the manpower and the cost.

2. The disaster response system of claim 1, wherein the monitoring unit comprises:
a zone detection module configured to specify the satellite image shooting area based on the weather information;
a first prediction module configured to predict a type of damage predicted for each zone of the specified satellite image shooting area; and
a second prediction module configured to predict the damage occurrence probability and a scale of damage based on the weather information and the type of damage predicted for each zone, when the type of disaster corresponds to either of a forest fire, an earthquake, a typhoon or a tsunami.

3. The disaster response system of claim 1 or 2, wherein the determination unit comprises:
a damage occurrence determination module configured to determine the damage occurrence status and a type of damage that has occurred through the satellite image; and
a control module configured to specify a damaged area and to request a high-resolution satellite image of the damaged area.

4. The disaster response system of claim 1, wherein the damage calculator is configured to:
detect the change in the satellite image of the damaged area and a change in the weather information through the deep learning module or the AI server and predict a degree of damage according to the change in the satellite image and the change in the weather information, and
calculate the first information on the manpower and the cost required for recovery of the damage in the damaged area and the second information on the support manpower and equipment required for recovery of the damage based on the predicted degree of damage.

5. The disaster response system of claim 1 or 4, wherein the damage calculator is configured to,
detect a change in traffic information from a first place to which the support manpower and equipment are to be dispatched to a second place in the damaged area through the deep learning module or the AI server,
predict a spread degree of damage according to an arrival time of the support manpower and equipment based on the change in the satellite image, a change in the weather information, and the change in the traffic information,
calculate an additional input of the support manpower and equipment based on the predicted spread degree of damage, and
control a portion of the additional input of the support manpower and equipment to be dispatched to a third place when the predicted spread degree of damage is predicted to be spread to the third place adjacent to the second place.

## Patentansprüche

1. Katastrophenschutzsystem unter Verwendung eines Satellitenbildes, wobei das Katastrophenschutzsystem umfasst:
einen Empfänger, der zum Empfangen eines aufgenommenen Bildes von einem Satelliten eingerichtet ist;
einen Speicher, der dazu eingerichtet ist, betriebsmäßig mit dem Empfänger gekoppelt zu sein und das empfangene Satellitenbild zu speichern; und
eine zentrale Verarbeitungsvorrichtung, die dazu eingerichtet ist, betriebsmäßig mit dem Empfänger und dem Speicher gekoppelt zu sein und eine Wahrscheinlichkeit eines Schadenseintritts anhand einer zeitreihenbasierten Änderung im Satellitenbild vorherzusagen, einen Status eines Schadenseintritts zu bestimmen und als Reaktion auf einen Schadenseintritt ein Schadensausmaß zu berechnen,
wobei die zentrale Verarbeitungsvorrichtung umfasst:
eine Überwachungseinheit, die dazu eingerichtet ist, einen Katastrophentyp und die Wahrscheinlichkeit des Schadenseintritts in einem Satellitenbildaufnahmegebiet durch Verbindung mit einem Server für ein geografisches Informationssystem, GIS, der dazu eingerichtet ist, räumliche geografische Informationen bereitzustellen, und einem Server zur Bereitstellung von Wetterinformationen, der zum Bereitstellen von Wetterinformationen eingerichtet ist, vorherzusagen;
eine Bestimmungseinheit, die dazu eingerichtet ist, eine zeitreihenbasierte Änderungsrate des empfangenen Satellitenbildes zu erfassen und einen Schadenseintritt entsprechend dem Katastrophentyp zu bestimmen; und
einen Schadensrechner, der zum Berechnen des Schadensausmaßes entsprechend dem Eintritt des Katastrophentyps eingerichtet ist,
wobei der Schadensrechner umfasst:
ein Modul zur Berechnung des Schadensausmaßes, das dazu eingerichtet ist, unter Verwendung eines Schadensgebiets und von Standortinformationen von Endgeräten, die mit einer Basisstation in der Nähe des Schadensgebiets verbunden sind, Schäden an Menschen und unter Verwendung der räumlichen geografischen Informationen physische Schäden einteilend vorherzusagen;
ein Modul zur Schätzung des Unterstützungsausmaßes, das dazu eingerichtet ist, ein Unterstützungsausmaß zur Schadensbehebung entsprechend dem Schadensausmaß zu schätzen;
eine Datenbank, die dazu eingerichtet ist, regelmäßig Informationen über einen Standort und ein Ausmaß von Unterstützungspersonal und -ausrüstung zu empfangen, zu aktualisieren und zu verwalten; und
ein Modul zur Auswahl von Unterstützungsressourcen, das dazu eingerichtet ist, Unterstützungspersonal und -ausrüstung unter Verwendung eines Echtzeit-Satellitenbildes entsprechend dem vom Modul zur Schätzung des Unterstützungsausmaßes geschätzten Unterstützungsausmaß auszuwählen, und
wobei der Schadensrechner eingerichtet ist zum:
Erkennen einer Veränderung des Satellitenbildes des Schadensgebiets durch ein Modul zum tiefen Lernen oder einen Server für künstliche Intelligenz, KI, und Vorhersagen eines durch die Veränderung im Satellitenbild verursachten Schadensausmaßes, und
Berechnen erster Informationen zum erforderlichen Personal- und Kostenaufwand für eine Schadensbeseitigung im Schadensgebiet basierend auf dem vorhergesagten Schadensausmaß und
Berechnen zweiter Informationen zu dem für die Schadensbeseitigung erforderlichen Unterstützungspersonal und -ausrüstung unter Verwendung des Echtzeit-Satellitenbildes, der räumlichen geografischen Informationen, einer Katasterkarte, ergänzender Informationen zu den Wetterdaten und der ersten Informationen zu dem Personal- und Kostenaufwand.

2. Katastrophenschutzsystem nach Anspruch 1, wobei die Überwachungseinheit umfasst:
ein Zonenerkennungsmodul, das dazu eingerichtet ist, das Satellitenbildaufnahmegebiet basierend auf den Wetterinformationen festzulegen;
ein erstes Vorhersagemodul, das dazu eingerichtet ist, einen Typ von Schaden, der für jede Zone des festgelegten Satellitenbildaufnahmegebiets vorhergesagt wird, vorherzusagen; und
ein zweites Vorhersagemodul, das dazu eingerichtet ist, die Wahrscheinlichkeit eines Schadenseintritts und ein Schadensausmaß basierend auf den Wetterinformationen und dem für jede Zone vorhergesagten Typ von Schaden vorherzusagen, wenn der Katastrophentyp einem Waldbrand, einem Erdbeben, einem Taifun oder einem Tsunami entspricht.

3. Katastrophenschutzsystem nach Anspruch 1 oder 2, wobei die Bestimmungseinheit umfasst:
ein Modul zur Bestimmung des Schadenseintritts, das dazu eingerichtet ist, den Status des Schadenseintritts und einen Typ eines aufgetretenen Schadens anhand des Satellitenbildes zu bestimmen; und
ein Steuermodul, das dazu eingerichtet ist, ein Schadensgebiet festzulegen und ein hochauflösendes Satellitenbild des Schadensgebiets anzufordern.

4. Katastrophenschutzsystem nach Anspruch 1, wobei der Schadensrechner eingerichtet ist zum:
Erkennen der Änderung im Satellitenbild des Schadensgebiets und einer Änderung der Wetterinformationen durch das Modul zum tiefen Lernen oder den KI-Server und Vorhersagen eines Schadensausmaßes entsprechend der Änderung im Satellitenbild und der Änderung der Wetterinformationen, und
Berechnen der ersten Informationen zu dem für die Beseitigung des Schadens im Schadensgebiet erforderlichen Personal- und Kostenaufwand und der zweiten Informationen zu dem für die Beseitigung des Schadens erforderlichen Unterstützungspersonal und -ausrüstung basierend auf dem vorhergesagten Schadensausmaß.

5. Katastrophenschutzsystem nach Anspruch 1 oder 4, wobei der Schadensrechner eingerichtet ist zum:
Erkennen einer Änderung von Verkehrsinformationen von einem ersten Ort, zu dem Unterstützungspersonal und -ausrüstung entsandt werden sollen, zu einem zweiten Ort im Schadensgebiet durch das Modul zum tiefen Lernen oder den KI-Server,
Vorhersagen eines Schadensausbreitungsausmaßes entsprechend einer Ankunftszeit von Unterstützungspersonal und -ausrüstung basierend auf der Änderung im Satellitenbild, einer Änderung der Wetterinformationen und der Änderung der Verkehrsinformationen,
Berechnen eines zusätzlichen Einsatzes von Unterstützungspersonal und - ausrüstung basierend auf dem vorhergesagten Schadensausbreitungsausmaß und
Steuern eines Teils des zusätzlichen Einsatzes von Unterstützungspersonal und -ausrüstung, die an einen dritten Ort entsandt werden sollen, wenn vorhergesagt wird, dass sich das vorhergesagte Schadensausbreitungsausmaß auf den dritten Ort neben dem zweiten Ort ausbreitet.

## Revendications

1. Système de réponse à un sinistre à l'aide d'une image satellite, le système de réponse à un sinistre comprenant:
un récepteur configuré pour recevoir une image capturée par un satellite;
une mémoire configurée pour être couplée fonctionnellement au récepteur et pour stocker l'image satellite reçue; et
un dispositif central de traitement configuré pour être couplé fonctionnellement au récepteur et à la mémoire et pour prédire une probabilité de survenue de dommages par le biais d'un changement de série temporelle dans l'image satellite, pour déterminer un statut de survenue de dommages et pour calculer une ampleur de dommage en réponse à la survenue du dommage,
dans lequel le dispositif central de traitement comprend:
une unité de surveillance configurée pour prédire un type de sinistre et la probabilité de survenue de dommages dans une zone de prise de vue par satellite par le biais d'une connexion à un serveur de système d'information géographique, SIG, configuré pour fournir des informations géographiques spatiales et un serveur de fourniture de renseignements météorologiques configuré pour fournir des informations météorologiques;
une unité de détermination configurée pour détecter un taux de changement de série temporelle de l'image satellite reçue et pour déterminer la survenue de dommages en fonction du type de sinistre; et
un calculateur de dommages configuré pour calculer l'ampleur des dommages en fonction de la survenue du type de sinistre,
dans lequel le calculateur de dommages comprend:
un module de calcul de l'ampleur des dommages configuré pour prévoir distinctivement les dégâts humains à l'aide d'une zone endommagée et des informations de localisation des terminaux connectés à une station de base proche de la zone endommagée, et les dommages physiques à l'aide des informations géographiques spatiales;
un module d'estimation d'ampleur de soutien configuré pour estimer une ampleur de soutien pour la réparation des dommages en fonction de l'ampleur des dommages;
une base de données configurée pour recevoir, mettre à jour et gérer périodiquement des informations sur l'emplacement et l'ampleur de la main-d'œuvre et de l'équipement de soutien; et
un module de sélection de ressources de soutien configuré pour sélectionner la main-d'œuvre et l'équipement de soutien à l'aide d'une image satellite en temps réel en fonction de l'ampleur du soutien estimée par le module d'estimation de l'ampleur de soutien, et
dans lequel le calculateur de dommages est configurée pour,
détecter un changement dans l'image satellite de la zone endommagée au moyen d'un module d'apprentissage profond ou d'un serveur d'intelligence artificielle, IA, et prédire l'ampleur du dommage causé par le changement dans l'image satellite, et
calculer les premières informations sur la main-d'œuvre et les coûts nécessaires à la réparation des dommages dans la zone endommagée, sur la base de l'ampleur de dommage prédite, et
calculer les deuxièmes informations sur la main-d'œuvre et l'équipement nécessaires à la réparation des dommages à l'aide de l'image satellite en temps réel, des informations géographiques spatiales, d'un plan cadastral, d'informations auxiliaires sur les renseignements météorologiques et des premières informations sur la main-d'œuvre et le coût.

2. Système de réponse à un sinistre la revendication 1, dans lequel l'unité de surveillance comprend:
un module de détection de zone configuré pour spécifier la zone de prise de vue de l'image satellite en fonction des renseignements météorologiques;
un premier module de prédiction configuré pour prédire un type de dommage prédit pour chaque zone de la zone de prise de vue d'image satellite spécifiée; et
un second module de prédiction configuré pour prédire la probabilité de survenue de dommages et l'ampleur des dommages sur la base des renseignements météorologiques et du type de dommage prédit pour chaque zone, lorsque le type de sinistre correspond à l'un parmi un feu de forêt, un tremblement de terre, un typhon ou un tsunami.

3. Système de réponse à un sinistre selon la revendication 1 ou 2, dans lequel l'unité de détermination comprend:
un module de détermination de survenue de dommages configuré pour déterminer la nature de la survenue des dommages et le type de dommages survenus à partir de l'image satellite; et
un module de commande configuré pour spécifier une zone endommagée et pour demander une image satellite à haute résolution de la zone endommagée.

4. Système de réponse à un sinistre selon la revendication 1, dans lequel le calculateur de dommages est configurée pour:
détecter le changement dans l'image satellite de la zone endommagée et un changement des renseignements météorologiques par le biais du module d'apprentissage profond ou du serveur d'IA et prédire une ampleur des dommages en fonction du changement dans l'image satellite et du changement des renseignements météorologiques, et
calculer les premières informations sur la main-d'œuvre et le coût nécessaires à la réparation des dommages dans la zone endommagée et les deuxièmes informations sur la main-d'œuvre et l'équipement de soutien nécessaires à la réparation des dommages sur la base de l'ampleur des dommage prédite.

5. Système de réponse à un sinistre selon la revendication 1 ou 4, dans lequel le calculateur de dommages est configurée pour,
détecter un changement des informations relatives à la circulation entre un premier lieu vers lequel la main-d'œuvre et l'équipement de soutien doivent être envoyés et un deuxième lieu dans la zone endommagée, grâce au module d'apprentissage profond ou au serveur IA,
prévoir l'étendue des dommages en fonction de l'heure d'arrivée de la main-d'œuvre et de l'équipement de soutien, sur la base de la modification de l'image satellite, de la modification des renseignements météorologiques et de la modification des informations relatives à la circulation,
calculer une intervention supplémentaire de main-d'œuvre et un apport d'équipement de soutien sur la base de l'étendue des dommages prédite, et
déplacer une partie de l'intervention supplémentaire de main-d'œuvre et d'équipement de soutien dans un troisième lieu lorsque la propagation prédite des dommages est susceptible de s'étendre au troisième lieu adjacent au deuxième lieu.
